**Europäisches Patentamt**

**European Patent Office**

**Office européen des brevets**

(19)

(11) Veröffentlichungsnummer : **0 101 531 B1**

(12) **EUROPÄISCHE PATENTSCHRIFT**

(45) Veröffentlichungstag der Patentschrift :
27.07.88

(51) Int. Cl.⁴ : **H 04 B   1/74, H 01 P   1/213**

(21) Anmeldenummer : **83104053.0**

(22) Anmeldetag : **26.04.83**

(54) **Mikrowellen-Weichenanordnung mit Sender- bzw. Empfängerersatzschaltung.**

(30) Priorität : **16.07.82 DE 3226728**

(43) Veröffentlichungstag der Anmeldung :
**29.02.84 Patentblatt 84/09**

(45) Bekanntmachung des Hinweises auf die Patenterteilung : **27.07.88 Patentblatt 88/30**

(84) Benannte Vertragsstaaten :
**AT BE CH DE FR GB LI LU NL SE**

(56) Entgegenhaltungen :
**DE-A- 1 466 312
DE-B- 1 068 775
TECHNISCHE MITTEILUNGEN AEG-TELEFUNKEN,
Band 59, Nr. 3/4, 1969, Seiten 184-186; E. NUDING:
"Eine breitbandige Frequenzweiche zur Ausnutzung
einer Antennenanlage für zwei Richtfunkbereiche"
TECHNISCHE MITTEILUNGEN AEG-TELEFUNKEN,
Band 66, Nr. 2/3, 1976, Seiten 72-74; W. SCHNEIDER:
"Leitungs-Ersatzschaltgeräte für Richtfunksysteme"
PATENTS ABSTRACTS OF JAPAN, Band 4, Nr. 10 (E-
167), 25. Januar 1980; & JP - A - 54 151 314**

(73) Patentinhaber : **ANT Nachrichtentechnik GmbH
Gerberstrasse 33
D-7150 Backnang (DE)**

(72) Erfinder : **Hirsch, Gerhard, Dipl.-Ing.
Häfnersweg 66
D-7150 Backnang (DE)**
Erfinder : **Hägele, Walter, Dipl.-Ing.
Einsteinstrasse 14
D-7150 Backnang (DE)**

## Beschreibung

Die vorliegende Erfindung betrifft eine Mikrowellen-Weichenanordnung mit in Kette geschalteten Zirkulatoren zum Aufschalten von mehreren Sendern bzw. Empfängern, die jeweils verschiedenen Frequenzkanälen zugeordnet sind, auf eine gemeinsame Antenne, wobei mindestens ein Reservesender bzw. Reserveempfänger vorhanden ist, der für ein ausgefallenes Gerät an die Antenne geschaltet werden kann.

Um den hohen Zuverlässigkeitsanforderungen eines Richtfunksystems gerecht zu werden, sind Weichenanordnungen mit Reservegeräten zu versehen, die anstelle von ausgefallen Sendern oder Empfängern an die Antenne durchgeschaltet werden können.

Ein Beispiel für die Beschaltung einer Mikrowellen-Weichenanordnung mit einem Reservesender bzw. -empfänger, eine sogenannte n+1 Linienersatzschaltung, geht aus dem Prospekt von AEG-TELEFUNKEN Weitverkehr und Kabeltechnik, « Schutzschaltgerät SSG n+1 für Breitband-Richtfunksysteme » 11.76, hervor. Dort ist das Reservegerät wie die anderen Sender bzw. Empfänger an einen der in Kette geschalteten Weichen (Zirkulatoren) angeschlossen. Im Falle der Störung eines der Betriebsgeräte wird das zu übertragende Signal in der Basisfrequenz- oder der Zwischenfrequenzebene auf das Reservegerät umgeschaltet. Das Reservegerät wird auf einem von den anderen Sendern bzw. Empfängern noch nicht belegten Frequenzkanal betrieben. Solange das zur Verfügung stehende Frequenzband noch nicht voll ausgenutzt ist, steht dem nichts im Wege, für das oder die Reservegeräte eigene Frequenzkanäle bereitzustellen. Häufig kommt man aber nicht umhin, das Frequenzband voll auszunutzen, also sämtliche Frequenzkanäle mit Sendern und Empfängern zu belegen. Durch die Zuordnung der Reservegeräte zu eigenen Frequenzkanälen wird wertvoller Platz auf dem Frequenzband, besonders bei der heute immer dichteren Frequenzbandbelegung, verschwendet.

Der Erfindung liegt daher die Aufgabe zugrunde, eine Mikrowellen-Weichenanordnung der eingangs genannten Art mit mindestens einem Reservesender bzw. -empfänger zu beschalten, für den kein eigener Frequenzkanal bereitgestellt werden muß.

Diese Aufgabe wird erfindungsgemäß dadurch gelöst, daß für jeden Reservesender bzw. Reserveempfänger in dem Signalweg zwischen der Antenne und dem ersten an einen der Sender bzw. Empfänger angeschlossenen Zirkulator ein zusätzlicher Zirkulator eingefügt ist, an dessen freien Arm, der im Normalbetrieb totalreflektierend abgeschlossen ist, über einen Schalter das Reservegerät anschließbar ist, und daß das Reservegerät auf den Frequenzkanal des jeweils zu ersetzenden Senders bzw. Empfängers abstimmbar ist.

Zweckmäßige Ausführungen der Erfindung gehen aus den Unteransprüchen hervor.

Ein Vorteil der erfindungsgemäßen Schaltung ist, daß man in aller Regel mit einem Reservesender bzw. einem Reserveempfänger auskommt und daß ohne Unterbrechung des Signalweges das Reservegerät an die Antenne durchgeschaltet und auch diese Weiche um mehrere Sender bzw. Empfänger ausgebaut werden kann.

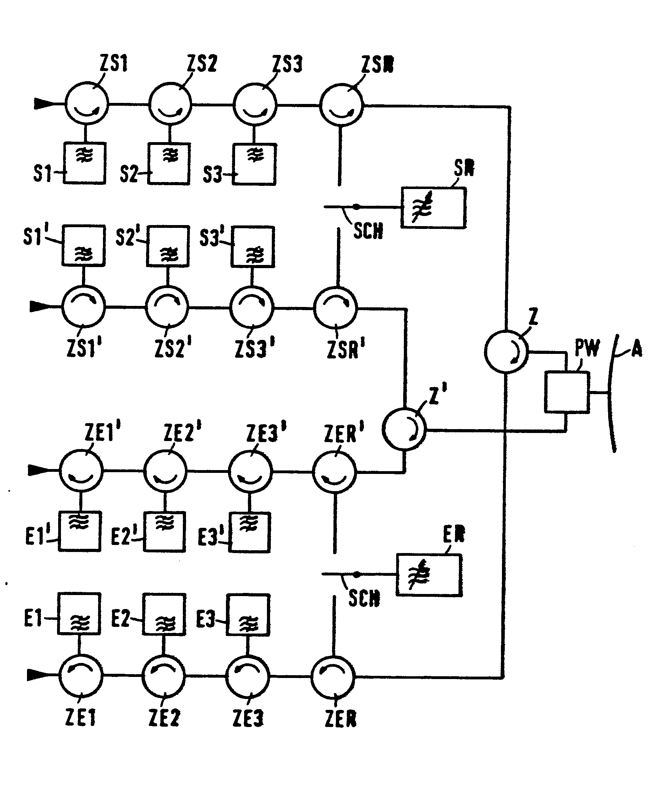

Anhand eines in der Zeichnung dargestellten Ausführungsbeispiels soll nun die Erfindung näher erläutert werden.

Die in der Figur gezeigte Weichenanordnung besitzt eine Zirkulatorkette ZS1, ZS2, ZS3 zur Aufschaltung der Sender S1, S2, S3 und eine Zirkulatorkette ZE2, ZE2, ZE3 zur Aufschaltung der Empfänger E1, E2, E3 auf eine Antenne A. Jeder Sender und Empfänger ist dabei einem anderen Frequenzkanal zugeordnet. Der Sende- und der Empfangsweichenzug sind über einen Zirkulator Z gemeinsam an die Antenne angeschlossen. Die Weichenanordnung läßt sich optimal ausnutzen, wenn, wie die Figur verdeutlicht, für zwei orthogonale Polarisationen Sende- und Empfangsweichenzüge vorhanden sind. Den soeben beschriebenen über den Zirkulator Z zusammengeschalteten Sende- und Empfangsweichenzug für die eine Polarisation sind für die andere Polarisation der Sendeweichenzug SZ1', ZS2', ZS3' mit den Sendern S1', S2', S3' und der Empfangsweichenzug ZE1', ZE2', ZE3' mit den Empfängern E1', E2', E3' hinzugefügt, die beide an einem Zirkulator Z' zusammengeführt sind. Eine der Antenne vorgeschaltete Polarisationsweiche PW teilt den einzelnen Weichenzügen die entsprechenden Polarisationen zu.

Jeder der Weichenzüge ist zur Antenne hin um einen zusätzlichen Zirkulator ZSR, ZSR', ZER, ZER' erweitert. Diese zusätzlichen Zirkulatoren dienen dazu, einen Reservesender SR oder einen Reserveempfänger ER auf die Antenne A aufzuschalten. Im Normalbetriebsfall, wenn alle Sender und Empfänger funktionsfähig sind, ist der freie Arm des jeweiligen Zusatzzirkulators totalreflektierend (z. B. Kurzschluß oder oder Leerlauf) abgeschlossen. Im Störungsfall, also dann, wenn einer der Sender oder Empfänger ausfällt, wird der freie Arm des in den gestörten Weichenzug eingesetzten Zusatzzirkulators über einen Schalter SCH an ein Reservegerät SR bzw. ER geschaltet. Es kann dazu ein mechanischer Schalter oder besser noch ein elektronisch steuerbarer, z. B. Pin-Dioden-Schalter, verwendet werden. Sollten wie in diesem Ausführungsbeispiel bei zwei Polarisationen zwei Empfangsweichenzüge und zwei Sendeweichenzüge vorhanden sein, so kann ein Reservesender sowohl anstelle eines der Sender S1, S2, S3 im einen Zweig als auch anstelle eines der Sender S1', S2', S3' im anderen Zweig an die Antenne durchgeschaltet werden. Das gleiche gilt auch für den Reserveempfänger, der für die Empfänger E1, E2, E3, E1', E2', E3' beider Empfangsweichenzüge bereitsteht.

Der Reservesender SR und der Reserveempfänger ER lassen sich auf den Frequenzkanal des Senders bzw. Empfängers abstimmen, den sie gerade ersetzen sollen. Die beiden Reservegeräte besitzen daher entweder ein über alle Frequenzkanäle durchstimmbares Filter oder eine Filterbatterie mit auf die einzelnen vorkommenden Frequenzkanäle fest abgestimmten Filtern. Die Reservegeräte belegen also keine anderen als die den Sendern und Empfängern zugeordneten Frequenzkanäle.

Selbstverständlich lassen sich bei höheren Anforderungen an die Betriebssicherheit auch mehrere Reserveempfänger und -sender in die oben beschriebene Weichenanordnung einfügen. Die Weichenzüge müßten dann je nach Anzahl der Reservegeräte um weitere zusätzliche Zirkulatoren erweitert werden, die in den Signalweg zwischen dem jeweils ersten Zirkulator S3, ZS3' ZE3, ZE3'der Sende- bzw. Empfangsweichenzügeund dem diese zusammenführenden Zirkulator Z, Z' einzufügen sind.

Erfolgt die Aufschaltung der Sender und Empfänger auf die gemeinsame Antenne alternierend über eine Zirkulatorkette gemäß DE-PS 26 41 875, so sind die Zusatzzirkulatoren für die Reservegeräte zwischen der Antenne und dem ersten Zirkulator der für die Aufschaltung der Sender und Empfänger zuständigen Zirkulatorkette einzufügen.

## Patentansprüche

1. Mikrowellen-Weichenanordnung mit in Kette geschalteten Zirkulatoren zum Aufschalten von mehreren Sendern (S1, S2, S3, S1', S2', S3') bzw. Empfängern (E1, E2, E3, E1', E2', E3'), die jeweils verschiedenen Frequenzkanälen zugeordnet sind, auf eine gemeinsame Antenne (A), wobei mindestens ein Reservesender (SR) bzw. Reserveempfänger (ER) vorhanden ist, der für ein ausgefallenes Gerät an die Antenne (A) geschaltet werden kann, dadurch gekennzeichnet, daß für jeden Reservesender (SR) bzw. Reserveempfänger (ER) in den Signalweg zwischen der Antenne (A) und dem ersten an einen der Sender (S1, S2, S3, S1', S2', S3') bzw. Empfänger (E1, E2, E3, E1', E2', E3') angeschlossenen Zirkulatoren (ZS3, ZS3', ZE3, ZE3') ein zusätzlicher Zirkulator (ZSR, ZSR', ZER, ZER') eingefügt ist, an dessen freiem Arm, der im Normalbetriebsfall totalreflektierend abgeschlossen ist, über einen Schalter (SCH) das Reservegerät (SR, ER) anschließbar ist, und daß das Reservegerät auf den Frequenzkanal des jeweils zu ersetzenden Senders bzw. Empfängers abstimmbar ist.

2. Mikrowellen-Weichenaordnung nach Anspruch 1, dadurch gekennzeichnet, daß die Umschaltung zwischen dem totalreflektierenden Abschluß und dem Reservergerät (SR, ER) über einen Pin-Dioden-Schalter erfolgt.

3. Mikrowellen-Weichenanordnung nach Anspruch 1, dadurch gekennzeichnet, daß jedes Reservergerät (SR, ER) eine Filterbatterie enthält, deren einzelne Filter auf jeweils einen der vorhandenen Frequenzkanäle abgestimmt sind.

4. Mikrowellen-Weichenanordnung nach Anspruch 1, dadurch gekennzeichnet, daß jedes Reservergerät (SR, ER) ein über die vorhandenen Frequenzkanäle durchstimmbares Filter besitzt.

## Claims

1. Microwave routing switch arrangement with circulators connected in cascade for the switching of either several transmitters (S1, S2, S3, S1', S2', S3') or of several receivers (E1, E2, E3, E1', E2', E3'), which are each associated with respectively different frequency channels, on to a common aerial (A), wherein at least one reserve transmitter (SR) or one reserve receiver (ER) is present, which can be switched to the aerial (A) for a failed equipment, characterised thereby, that for each reserve transmitter (SR) and each reserve receiver (ER) respectively, an additional circulator (ZSR, ZSR', ZER, ZER'), at the free arm — which in the normal operational case is terminated to be totally reflecting — of which the reserve equipment (SR, ER) is connectible through a switch (SCH), is inserted into the signal path between the aerial (A) and the first circulators (ZS3, ZS3', ZE3, ZE3') connected to either one of the transmitters (S1, S2, S3, S1', S2', S3') or to one of the receivers (E1, E2, E3, E1', E2', E3') and that the reserve equipment is turnable to the frequency channel of the transmitter or receiver respectively to be replaced.

2. Microwave routing switch arrangement according to claim 1, characterised thereby, that the switch-over between the totally reflecting termination and the reserve equipment (SR, ER) takes place through a PIN diode switch.

3. Microwave routing switch arrangement according to claim 1, characterised thereby, that each reserve equipment (SR, ER) contains a filter battery, the individual filters of which are each tuned to a respective one of the frequency channels present.

4. Microwave routing switch arrangement according to claim 1, characterised thereby, that each reserve equipment (SR, ER) possesses a filter which is tunable through the frequency channels present.

## Revendications

1. Agencement d'aiguillage pour micro-ondes, comportant des circulateurs montés en chaîne pour l'intrusion, sur une antenne commune (A), de plusieurs émetteurs (S1, S2, S3, S'1, S'2, S'3) ou récepteurs (E1, E2, E3, E'1, E'2, E'3) affectés à chaque fois à des canaux de fréquence différents, au moins un émetteur de réserve (SR) ou un récepteur de réserve (ER) étant présent, lequel peut être mis à l'antenne (A) au lieu d'un appareil défaillant, caractérisé par le fait que, pour chaque émetteur de réserve (SR) ou récepteur de réserve (ER), un circulateur supplémentaire (ZSR, ZSR', ZER, ZER') est inséré dans le trajet de signal entre l'antenne (A) et le premier circulateur (ZS3, ZS3', ZE3, ZE3') raccordé à l'un des émetteurs (S1, S2, S3, S'1, S'2, S'3) ou récepteurs (E1, E2, E3, E'1, E'2, E'3), le bras libre de ce circulateur supplémentaire étant terminé de manière totalement réfléchissante lorsque le fonctionnement est normal, et étant apte à être raccordé, par un commutateur (SCH), à l'appareil de réserve (SR, ER), et par le fait que l'appareil de réserve est apte à être accordé à chaque fois sur le canal de fréquence de l'émetteur ou du récepteur à remplacer.

2. Agencement d'aiguillage pour micro-ondes selon revendication 1, caractérisé par le fait que la commutation entre la terminaison totalement réfléchissante et l'appareil de réserve (SR, ER) s'effectue par l'intermédiaire d'un commutateur à diodes Pin.

3. Agencement d'aiguillage pour micro-ondes selon revendication 1, caractérisé par le fait que chaque appareil de réserve (SR, ER) comporte une batterie de filtres, dont les filtres individuels sont accordés chacun sur l'un des canaux de fréquence existants.

4. Agencement d'aiguillage pour micro-ondes selon revendication 1, caractérisé par le fait que chaque appareil de réserve (SR, ER) possède un filtre pouvant être accordé sur les canaux de fréquence existants.